# EUROPÄISCHE PATENTSCHRIFT

(11) **EP 2 072 872 B1**
(45) Veröffentlichungstag und Bekanntmachung des Hinweises auf die Patenterteilung: **23.06.2010**
(21) Anmeldenummer: 08105897.6
(22) Anmeldetag: 01.12.2008
(51) Int. Cl.: F16L 3/00, F16L 55/035, F24F 13/02

(54) **Montagewinkel**
Mounting bracket
Support de montage

(30) Priorität: 20.12.2007 DE 102007055887
(43) Veröffentlichungstag der Anmeldung: 24.06.2009
(73) Patentinhaber: HILTI Aktiengesellschaft, 9494 Schaan (LI)
(72) Erfinder: Birnbaum, Ulrich, 86929, Epfenhausen (DE); Mundwiler, Lukas, 4434, Hoelstein (CH)

(56) Entgegenhaltungen:
- EP-A- 1 070 904
- DE-A1- 2 458 814
- DE-A1- 3 818 220
- DE-A1- 4 040 539
- DE-U1- 20 102 258
- US-B1- 6 732 982

## Beschreibung

Die Erfindung betrifft einen Montagewinkel für eine Befestigung eines Kanals an einem Konstruktionselement mit einem Winkelelement, das einen ersten Schenkel zur Befestigung am Kanal und zumindest einen zweiten Schenkel mit einer ersten Durchführöffnung für ein Befestigungselement zur Befestigung des Montagewinkels am Konstruktionselement aufweist, mit einem ersten Gehäuseteil, das eine zweite Durchführöffnung für das Befestigungselement aufweist, und mit einem zweiten Gehäuseteil, das eine dritte Durchführöffnung für das Befestigungselement aufweist, wobei die Gehäuseteile den zweiten Schenkel an zwei gegenüberliegenden Seiten zumindest bereichsweise umgeben, und mit einem eine vierte Durchführöffnung für das Befestigungselement aufweisenden schalldämmenden Element, das den zweiten Schenkel bereichsweise umgibt und von den Gehäuseteilen entkoppelt.

In der Installationstechnik werden beispielsweise Lüftungskanäle aus Blech mit Montagewinkeln indirekt, z. B. über Montageschienen, oder direkt an Konstruktionselementen beispielsweise eines Bauwerks befestigt, wie z. B. an Decken oder an Wänden. Zur Vermeidung der Übertragung von Körperschall werden beispielsweise schalldämmende Elemente an diesen Montagewinkeln vorgesehen, die eine Entkopplung der Befestigung ermöglichen.

Aus der DE 199 34 429 A1 ist ein derartiger Montagewinkel bekannt, der sich in der Praxis bewährt hat und vorteilhafte Entkopplungseigenschaften bezüglich des Körperschalls aufweist. Dieser Montagewinkel ist jedoch aufwändig in der Herstellung, so dass weiterhin ein Bedürfnis besteht, den bekannten Montagewinkel zu verbessern.

Aus der DE 38 18 220 A1 ist ein gattungsgemässer Montagewinkel mit einem Z-förmigen Winkelelement bekannt, das an einem zweiten Schenkel eine Durchführöffnung für ein Befestigungselement aufweist, wobei der zweite Schenkel bereichsweise umfänglich von einem eine Durchführöffnung für das Befestigungselement aufweisenden schalldämmenden Element umgeben ist. Beidseitig von dem schalldämmenden Element sind jeweils ein erstes und ein zweites scheibenförmiges Gehäuseteil vorgesehen, die den zweiten Schenkel an zwei gegenüberliegenden Seiten bereichsweise umgeben und die jeweils eine Durchführöffnung für das Befestigungselement aufweisen. Das schalldämmende Element entkoppelt den zweiten Schenkel von den Gehäuseteilen.

Nachteilig an der bekannten Lösung ist, dass der Montagewinkel nur bedingt justierbar ist. Die Befestigungspunkte am Untergrund stimmen oftmals, z. B. aufgrund ungenauer Positionierung oder in Betonuntergründen aufgrund Bewehrungstreffer, mit den eigentlich erforderlichen Positionen nicht überein, so dass diese gegenüber diesen leicht verschoben sind. Dies bedingt eine gewisse Justierbarkeit der erstellten Befestigung auch im montierten Zustand des Montagewinkels, welche bei dem bekannten Montagewinkel nur bedingt, im Bereich des Durchmesserunterschieds zwischen dem Befestigungselement und der Durchführöffnung im zweiten Schenkel gegeben ist.

Aufgabe der Erfindung ist es, einen Montagewinkel für eine Befestigung eines Kanals an einem Untergrund zu schaffen, der im montierten Zustand justierbar und gleichzeitig einfach zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung sind die Durchführöffnungen in dem zumindest einen zweiten Schenkel, den Gehäuseteilen und im schalldämmenden Element Langlöcher, wobei das Langloch in dem zumindest einen zweiten Schenkel in vollständiger Überdeckung mit den Langlöchern in den Gehäuseteilen und dem Langloch in dem schalldämmenden Element liegt.

Die Langlöcher in den genannten Teilen des Montagewinkels sind bezüglich einer gemeinsamen Durchführebene für das Befestigungselement und ihrer Längsachsen koaxial zueinander ausgerichtet beziehungsweise angeordnet. Mit den übereinander angeordneten Langlöchern ist die Verschiebbarkeit eines am Konstruktionselement direkt oder indirekt angeordneten Montagewinkels gegeben und für den Anwender klar ersichtlich. Dabei ist der Montagewinkel einfach herstellbar, da nur wenige Teile zusammengefügt werden müssen, wobei diese einen grossen Toleranzbereich aufweisen können. Dies gewährleistet neben der vorteilhaften Schallentkopplung eine wirtschaftliche Fertigung und Montage des Montagewinkels.

Das Winkelelement ist beispielsweise L- oder Z-förmig, wobei vorteilhaft der erste Schenkel des Winkelelementes mit mehreren Bohrungen z. B. für Befestigungsschrauben zur Anordnung des Montagewinkels an einem Kanal versehen ist. Das Winkelelement ist vorteilhaft ein Stanz-/Biegeteil aus Metall.

Das schalldämmende Element ist vorteilhaft aus einem elastischen Kunststoff z. B. in einem Extrusionsverfahren gefertigt. Das schalldämmende Element umfasst beispielsweise zwei Teilelemente die beidseitig des zumindest einen zweiten Schenkels zwischen den Gehäuseteilen vorgesehen sind. Alternativ ist das schalldämmende Element schlauchförmig ausgebildet und wird über das ein Ende des Montagewinkels auf den zumindest einen zweiten Schenkel des Winkelelementes geschoben, bis seine als Langloch ausgebildete vierte Durchführöffnung über der als Langloch ausgebildeten ersten Durchführöffnung im zumindest einen zweiten Schenkel zu liegen kommt. In einer vorteilhaften Ausführungsform des schalldämmenden Elementes ist dieses als zwei über ein Filmgelenk verbundene Flachelemente z. B. in einem Extrusionsverfahren ausgebildet, die zur Montage am zumindest einen zweiten Schenkel des Winkelelementes um diesen herum geklappt wird. Die Durchführöffnungen für das Befestigungselement in jedem Teil beziehungsweise des schalldämmenden Elementes bilden im zusammengeklappten Zustand des schalldämmenden Elementes die vierte Durchführöffnung für das Befestigungselement aus. Zur Ausbildung der Langlöcher in dem schalldämmenden Element werden diese vorteilhaft aus diesem ausgestanzt.

Vorteilhaft sind die Gehäuseteile über ein Gelenk miteinander verbunden und werden zur Montage um das bereits vorgängig an dem zumindest einen zweiten Schenkel des Montagewinkels angeordnete schalldämmende Element herum geklappt und miteinander verbunden.

Das Befestigungselement ist beispielsweise eine Gewindestange, die direkt am Konstruktionselement oder indirekt z. B. über eine Schienenmutter an einer Montageschiene angeordnet ist. Die Gewindestange wird mit einem Ende durch die übereinanderliegenden Durchführöffnungen geführt, wobei der Montagewinkel über Sicherungs- und Spannmuttern in der gewünschten Ausrichtung zum Konstruktionselement an der Gewindestange festgelegt wird.

Vorzugsweise ist an jeder Durchführöffnung der Gehäuseteile ein Kragen vorgesehen, wobei die Kragen im zusammengefügten Zustand des Montagewinkels einander zugewandt sind, und das schalldämmende Element weist zumindest zwei einander diametral gegenüberliegende Vorsprünge auf, die in das Langloch des schalldämmenden Elementes ragen. Vorteilhaft umgeben die Kragen die Durchführöffnung der Gehäuseteile vollständig beziehungsweise umlaufend. Die Abmessungen der Kragen in einer von einem Gehäuseteil aufgespannten Ebene sind kleiner als die entsprechenden Abmessungen der ersten Durchführöffnung im zumindest einen zweiten Schenkel. Beim Zusammenfügen des Montagewinkels werden die in das Langloch ragenden Vorsprünge von den abragenden Kragen der Gehäuseteile umgebogen, wobei diese Materialabschnitte des schalldämmenden Elementes zwischen den Kragen der Gehäuseteile und dem Rand des Langlochs im zumindest einen zweiten Schenkel des Winkelelementes zu liegen kommen. Damit ist eine zuverlässige Schallentkopplung auch in eine Richtung quer zu der von den Durchführöffnungen definierten Durchführachse gewährleistet.

Zudem sichern die einander zugewandten Kragen der Gehäuseteile eine vorteilhafte Entkopplung auch im verspannten Zustand des Montagewinkels. Beim Verspannen des Befestigungspunktes werden die beiden Gehäuseteile zueinander verschoben, wobei die einander zugewandten Kragen um die als Langlöcher ausgebildeten zweiten und dritten Durchführöffnungen in die erste Durchführöffnung im zumindest einen zweiten Schenkel des Winkelelementes eindringen und den maximalen Verschiebeweg der Gehäuseteile zueinander begrenzen. Damit wird die maximale Kompression des zwischen diesen Gehäuseteilen und dem zumindest einen zweiten Schenkel des Winkelelementes angeordneten schalldämmenden Elementes limitiert, was die vorteilhafte Schallentkopplung auch im festgelegten Zustand gewährleistet. Die Gehäuseteile weisen vorteilhaft randseitig abragende Umgreifabschnitte auf, die im zusammengeführten Zustand der Gehäuseteile einander zugewandt sind. Diese einander zugewandten Umgreifabschnitte begrenzen gegebenenfalls zusätzlich die maximale Verschiebbarkeit der Gehäuseteile zueinander, was z. B. auch bei einer Verspannung in eine Richtung schräg zu einer von den Gehäuseteilen aufgespannten Ebene des die Durchführöffnungen durchdringenden Befestigungselementes weiterhin eine ausreichende Schallentkopplung der Befestigung gewährleistet. Die Gehäuseteile sind vorteilhaft Stanz-/Biegeteile aus Metall.

Bevorzugt verlaufen die zumindest zwei Vorsprünge in der Längsachse des Langlochs des schalldämmenden Elementes, was im zusammengesetzten Zustand des Montagewinkels eine vorteilhafte Schallentkopplung in Richtung der Längsachse der Langlöcher gewährleistet.

Vorzugsweise sind zumindest zwei weitere, einander diametral gegenüberliegende Vorsprünge vorgesehen, die quer zur Längsachse des Langlochs in das Langloch des schalldämmenden Elementes ragen, was im zusammengesetzten Zustand des Montagewinkels eine vorteilhafte Schallentkopplung auch in diese Richtung gewährleistet.

Bevorzugt ist an einem Kragen des einen Gehäuseteils zumindest eine den freien Rand dieses Kragens überragende Nase sowie am gegenüberliegenden Kragen des anderen Gehäuseteiles zumindest eine Ausnehmung zur Aufnahme der Nase vorgesehen. Die Nase ist vorteilhaft derart an dem entsprechenden Kragen angeordnet, dass beim Zusammenfügen der Gehäuseteile ein in das Langloch des schalldämmenden Elementes ragender Vorsprung von der Nase umgebogen wird und zwischen der Nase und dem Rand der ersten Durchführöffnung im zumindest einen zweiten Schenkel des Winkelelementes zu liegen kommt.

In einer vorteilhaften Ausführungsform sind die in das Langloch des schalldämmenden Elementes ragenden Vorsprünge derart angeordnet, dass die vorgenannten Nasen beim Zusammenführen der Teile des Montagewinkels mit diesen in Anlage kommen und dabei das Umbiegen dieser Vorsprünge vorteilhaft unterstützen.

Vorzugsweise weist das schalldämmende Element zumindest eine entlang der Längsachse seines Langlochs verlaufende Verstärkung auf, deren Höhe über einer von dem schalldämmenden Element aufgespannten Ebene zumindest dem 1.0-fachen der Dicke des schalldämmenden Elementes entspricht. Über die zumindest eine Verstärkung lässt sich die Weichheit und somit die Entkopplungseigenschaften des schalldämmenden Elementes bedarfsweise anpassen. Die Dicke der Verstärkungen gewährleistet auch bei einer Anordnung des Befestigungselementes an einem der Anschläge des Langlochs und dem daraus resultierenden Hebelarms beziehungsweise Verkippung des zumindest einen zweiten Schenkels zwischen den Gehäuseteilen eine ausreichende Schallentkopplung bei einem geringen Materialbedarf. Vorteilhaft sind mehrere Verstärkungen vorgesehen, wobei weiter vorteilhaft beidseitig und randseitig des Langlochs im schalldämmenden Element jeweils Verstärkungen vorgesehen sind, welche das schalldämmende Element in diesem Bereich vorteilhaft verstärken.

Bevorzugt verläuft die zumindest eine Verstärkung in der Längsachse des Langlochs des schalldämmenden Elementes, womit das schalldämmende Element vorteilhafte Entkopplungs- und Stabilitätseigenschaften aufweist. Vorteilhaft sind angrenzend an das Langloch beidseitig in der Längsachse des Langlochs verlaufende Verstärkungen vorgesehen, die vorteilhaft die in das Langloch ragenden Vorsprünge ausbilden. Damit steht zwischen den Kragen der Gehäuseteile und dem Rand des Langlochs im zumindest einen zweiten Schenkel des Winkelelementes ein vorteilhafter Anteil von Material des schalldämmenden Elementes zur Schallentkopplung zur Verfügung.

Die Erfindung wird nachstehend anhand von Ausführungsbeispielen näher erläutert. Es zeigen:
Fig. 1 Ein erstes Ausführungsbeispiel eines Montagewinkels in Ansicht von vorne;
Fig. 2 den Montagewinkel in einer Schnittdarstellung entlang der Linie II-II in Fig. 1;
Fig. 3 das schalldämmende Element in aufgeklappter Stellung in Aufsicht;
Fig. 4 das schalldämmende Element in Seitenansicht gem. Linie IV-IV in Fig. 3;
Fig. 5 eine Variante eines schalldämmenden Elementes in Aufsicht; und
Fig. 6 das schalldämmende Element in montierter Stellung in einer Schnittdarstellung entlang Linie VI-VI in Fig. 5.

Grundsätzlich sind in den Figuren gleiche Teile mit den gleichen Bezugszeichen versehen.

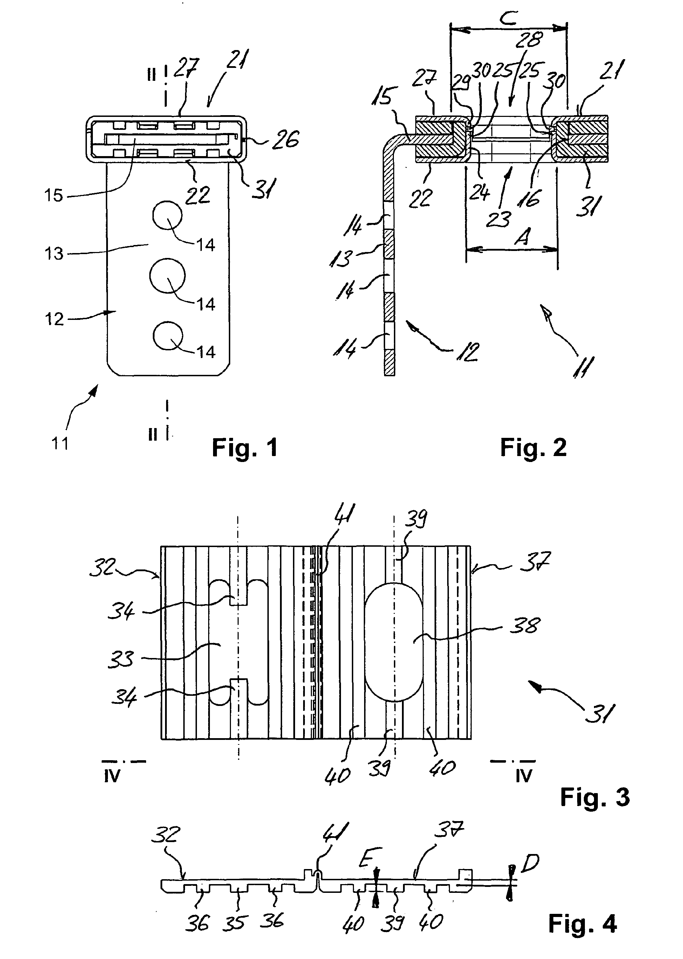

Der in den Figuren 1 bis 4 dargestellte Montagewinkel 11 für eine Befestigung eines Kanals an einem Konstruktionselement umfasst ein Winkelelement 12, ein Gehäuse 21 und ein schalldämmendes Element 31.

Das Winkelelement 12 ist L-förmig und weist einen ersten Schenkel 13 mit mehreren Bohrungen 14 zur Befestigung am Kanal und einen zweiten Schenkel 15 mit einer als Langloch ausgebildeten, ersten Durchführöffnung 16 für ein hier nicht dargestelltes Befestigungselement zur Befestigung des Montagewinkels 11 am Konstruktionselement auf.

Das den zweiten Schenkel 15 umgebende Gehäuse 21 umfasst ein erstes Gehäuseteil 22 und ein zweites Gehäuseteil 27, die einteilig ausgebildet und über ein Gelenk 26 zueinander klappbar sind. Im ersten Gehäuseteil 22 ist eine als Langloch ausgebildete, zweite Durchführöffnung 23 für das Befestigungselement und im zweiten Gehäuseteil 27 ist eine ebenfalls als Langloch ausgebildete, dritte Durchführöffnung 28 für das Befestigungselement vorgesehen, wobei diese Langlöcher im zusammengesetzten Zustand des Montagewinkels 11 von dem Langloch als Durchführöffnung 16 im zweiten Schenkel 15 des Winkelelementes 12 vollständig überdeckt sind. Im zusammengeklappten Zustand des Gehäuses 21 sind die Durchführöffnungen 23 und 28 deckungsgleich zueinander. An jeder Durchführöffnung 23 und 28 ist ein umlaufender Kragen 24 bzw. 29 vorgesehen, wobei die freien Enden der Kragen 24 und 29 einander zugewandt sind. Die Abmessungen der Kragen 24 bzw. 29 in einer von einem Gehäuseteil 22 bzw. 27 aufgespannten Ebene, z. B. die Abmessung A in Fig. 2, sind kleiner als die entsprechenden Abmessungen der Durchführöffnung 16 im zweiten Schenkel, z. B. die Abmessung C in Fig. 2. An dem das Langloch des ersten Gehäuseteiles 22 umgebenden Kragen 24 sind einander diametral gegenüberliegende, den freien Rand des Kragens 24 überragende Nasen 25 vorgesehen, die im zusammengeführten Zustand des Gehäuses 21 in zwei am gegenüberliegenden das Langloch des zweiten Gehäuseteiles 27 umgebenden Kragen 29 vorgesehenen Ausnehmungen 30 Aufnahme finden.

Das schalldämmende Element 31 ist vorteilhaft aus einem elastischen Material extrudiert und weist ein erstes Elementteil 32 und ein zweites Elementteil 37 auf, die über ein Gelenk 41 mit einander verbunden sind. In jedes Elementteil 32 und 37 ist jeweils eine als Langloch ausgebildete Durchführöffnung 33 bzw. 38 ausgestanzt, die zusammen die vierte Durchführöffnung für das Befestigungselement ausbilden. Zur Montage des Montagewinkels 11 wird das schalldämmende Element 31 um den zweiten Schenkel 15 des Winkelelementes 12 gelegt, so dass dieser von dem schalldämmenden Element 31 weitgehend vollständig umgeben und in alle Richtungen von den Gehäuseteilen 22 und 27 entkoppelt ist. Diese Langlöcher sind im zusammengesetzten Zustand des Montagewinkels 11 von dem Langloch als Durchführöffnung 16 im zweiten Schenkel 15 des Winkelelementes 12 vollständig überdeckt.

Weiter weist das schalldämmende Element 31 zwei einander diametral gegenüberliegende Vorsprünge 34 auf, die in das Langloch im ersten Elementteil 32 des schalldämmenden Elementes 31 ragen und in der Längsachse des Langlochs des schalldämmenden Elementes 31 verlaufen. Das schalldämmende Element 31 weist mehrere entlang der Längsachse seiner Langlöcher verlaufende Verstärkungen 35, 36 und 39, 40 auf, deren Höhe E über einer von dem schalldämmenden Element 31 aufgespannten Ebene zumindest dem 1.0-fachen der Dicke D des schalldämmenden Elementes 31 entspricht. Die Verstärkungen 35 bzw. 39 verlaufen in der Längsachse des entsprechenden Langlochs. Beidseitig des entsprechenden Langlochs als Durchführöffnung 33 bzw. 38 für das Befestigungselement ist jeweils eine entlang der Längsachse des entsprechenden Langlochs verlaufende Verstärkung 36 bzw. 40 vorgesehen. Zudem sind die seitlichen Ränder des schalldämmenden Elementes 31 ebenfalls mit entlang der Längsachse des Langlochs verlaufenden Verstärkungen versehen.

Beim Zusammenfügen der einzelnen Teile des Montagewinkels 11 werden die in das Langloch des schalldämmenden Elementes 31 ragenden Vorsprünge 34 von dem die zweite Durchführöffnung 23 umgebenden Kragen 24 beziehungsweise von den diesen Kragen 24 überragenden Nasen 25 des ersten Gehäuseteils 22 umgebogen, so dass diese Materialabschnitte des schalldämmenden Elementes 31 zwischen den die zweite Durchführöffnung 23 umgebenden Kragen 24 des ersten Gehäuseteils 22 und dem Rand der ersten Durchführöffnung 16 im zweiten Schenkel 15 des Winkelelementes 12 zu liegen kommen.

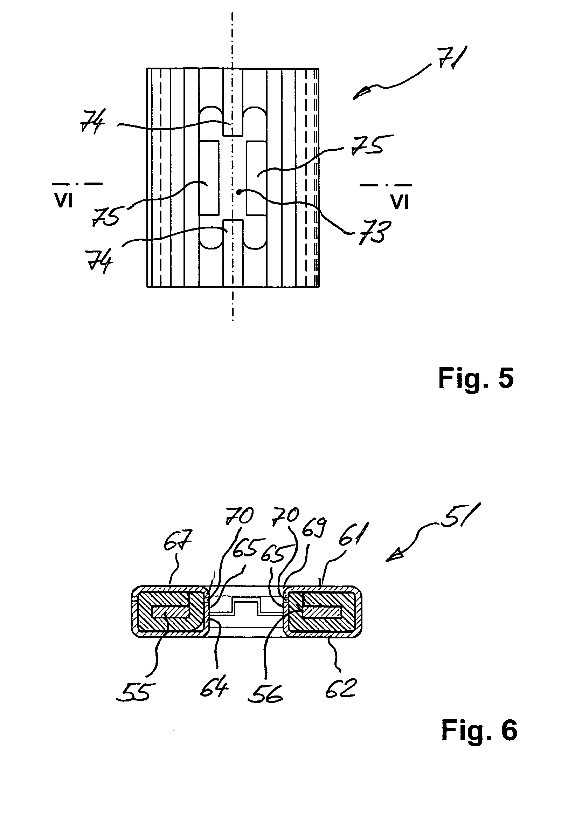

Der in den Figuren 5 und 6 teilweise dargestellte Montagewinkel 51 weist im Gegensatz zum Montagewinkel 11 ein schalldämmendes Element 71 auf, das neben den in das Langloch als vierte Durchführöffnung 73 ragenden, in der Längsachse des Langlochs liegenden Vorsprüngen 74 zwei weitere, einander diametral gegenüberliegende Vorsprünge 75 aufweist, die quer zur Längsachse des Langlochs in das Langloch des schalldämmenden Elementes 71 ragen. Das erste Gehäuseteil 62 des Gehäuses 61 weist an seinem das Langloch umgebenden Kragen 64 an entsprechenden Stellen zusätzliche, den freien Rand des Kragens 64 ebenfalls überragende Nasen 65 auf, die im zusammengeführten Zustand in Ausnehmungen 70 am zweiten Gehäuseteil 67 eindringen, die in den die Langlöcher im zweiten Gehäuseteil 67 umgebenden Kragen 69 vorgesehen sind. Wie in Figur 6 ersichtlich, ist bei dieser Ausführungsform im zusammengeführten Zustand eine vorteilhafte Entkopplung mit dem zusätzlichen Materialanteil des schalldämmenden Elementes 71 in eine Richtung quer zu den Langlöchern des Montagewinkels 51 gewährleistet, da der zweite Schenkel 55 des Winkelelementes nicht nur aussenseitig sondern auch im Bereich der als Langloch ausgebildeten, ersten Durchführöffnung 56 vollständig von dem Gehäuse 61 entkoppelt ist.

## Patentansprüche

1. Montagewinkel für eine Befestigung eines Kanals an einem Konstruktionselement mit einem Winkelelement (12), das einen ersten Schenkel (13) zur Befestigung am Kanal und zumindest einen zweiten Schenkel (15; 55) mit einer ersten Durchführöffnung (16; 56) für ein Befestigungselement zur Befestigung des Montagewinkels (11; 51) am Konstruktionselement aufweist,
mit einem ersten Gehäuseteil (22; 62), das eine zweite Durchführöffnung (23) für das Befestigungselement aufweist, und mit einem zweiten Gehäuseteil (27; 67), das eine dritte Durchführöffnung (28) für das Befestigungselement aufweist, wobei die Gehäuseteile (22, 27; 62, 67) den zweiten Schenkel (15; 55) an zwei gegenüberliegenden Seiten zumindest bereichsweise umgeben,
mit einem eine vierte Durchführöffnung (33, 38; 73) für das Befestigungselement aufweisenden schalldämmenden Element (31; 71), das den zweiten Schenkel (15; 55) bereichsweise umgibt und von den Gehäuseteilen (22, 27; 62, 67) entkoppelt, **dadurch**
**gekennzeichnet, dass**
die Durchführöffnungen (16, 23, 28, 33, 38; 73) in dem zumindest einen zweiten Schenkel (15; 55), den Gehäuseteilen (22, 27; 62, 67) und im schalldämmenden Element (31; 71) Langlöcher sind, wobei das Langloch in dem zumindest einen zweiten Schenkel (15; 55) in vollständiger Überdeckung mit den Langlöchern in den Gehäuseteilen (22, 27; 62, 67) und dem Langloch in dem schalldämmenden Element (31; 71) liegt.

2. Montagewinkel nach Anspruch 1, **dadurch gekennzeichnet, dass** an jeder Durchführöffnung (23; 28) der Gehäuseteile (22, 27; 62, 67) ein Kragen (24, 29; 64, 69) vorgesehen ist, wobei die Kragen (24, 29; 64, 69) im zusammengefügten Zustand des Montagewinkels (11; 51) einander zugewandt sind, und das schalldämmende Element (31; 71) zumindest zwei einander diametral gegenüberliegende Vorsprünge (34; 74, 75) aufweist, die in das Langloch des schalldämmenden Elementes (31; 71) ragen.

3. Montagewinkel nach Anspruch 2, **dadurch gekennzeichnet, dass** die zumindest zwei Vorsprünge (34; 74) in der Längsachse des Langlochs des schalldämmenden Elementes (31; 71) verlaufen.

4. Montagewinkel nach Anspruch 2 oder 3, **dadurch gekennzeichnet, dass** zumindest zwei weitere, einander diametral gegenüberliegende Vorsprünge (75) vorgesehen sind, die quer zur Längsachse des Langlochs in das Langloch des schalldämmenden Elementes (71) ragen.

5. Montagewinkel nach einem der Ansprüche 2 bis 4, **dadurch gekennzeichnet, dass** an einem Kragen (24; 64) des einen Gehäuseteils (22; 62) zumindest eine den freien Rand dieses Kragens (24; 64) überragende Nase (25; 65) sowie am gegenüberliegenden Kragen (25; 69) des anderen Gehäuseteiles (27; 67) zumindest eine Ausnehmung (30; 70) zur Aufnahme der Nase (25; 65) vorgesehen ist.

6. Montagewinkel nach einem der Ansprüche 1 bis 5, **dadurch gekennzeichnet, dass** das schalldämmende Element (31; 71) zumindest eine entlang der Längsachse seines Langlochs verlaufende Verstärkung (35, 36, 39, 40) aufweist, deren Höhe (E) über einer von dem schalldämmenden Element (31) aufgespannten Ebene zumindest dem 1.0-fachen der Dicke (D) des schalldämmenden Elementes (31) entspricht.

7. Montagewinkel nach Anspruch 6, **dadurch gekennzeichnet, dass** die zumindest eine Verstärkung (35, 39) in der Längsachse des Langlochs des schalldämmenden Elementes (31) verläuft.

## Claims

1. Mounting bracket for fastening a conduit on a structural element with a bracket element (12), which has a first leg (13) for fastening on the conduit and at least a second leg (15; 55) with a first feed-through opening (16; 56) for a fastening element for fastening the mounting bracket (11; 51) on the structural element,
with a first housing part (22; 62), which has a second feed-through opening (23) for the fastening element, and with a second housing part (27; 67), which has a third feed-through opening (28) for the fastening element, in which the housing parts (22, 27; 62, 67) surround the second leg (15; 55) on two opposite sides at least in certain areas,
with a sound absorbing element (31; 71), which has a fourth feed-through opening (33, 38; 73) for the fastening element, which surrounds the second leg (15; 55) in certain areas and is decoupled from the housing parts (22, 27; 62, 67),
**characterised in that**
the feed-through openings (16, 23, 28, 33, 38; 73) in at least one second leg (15; 55), the housing parts (22, 27; 62, 67) and in the sound absorbing element (31; 71) are elongated holes, in which the elongated hole in at least one second leg (15; 55) completely covers the elongated holes in the housing parts (22, 27; 62, 67) and the elongated hole in the sound absorbing element (31; 71).

2. Mounting bracket according to claim 1, **characterised in that** a collar (24, 29; 64, 69) is provided on each feed-through opening (23; 28) of the housing parts (22, 27; 62, 67), in which the collars (24, 29; 64, 69) face each other in the assembled state of the mounting bracket (11; 51), and the sound absorbing element (31; 71) has at least two projections (34; 74, 75) diametrically opposite each other, which project into the elongated hole of the sound absorbing element (31; 71).

3. Mounting bracket according to claim 2, **characterised in that** at least two projections (34; 74) run in the longitudinal axis of the elongated hole of the sound absorbing element (31; 71).

4. Mounting bracket according to claim 2 or 3, **characterised in that** at least two further projections (75) diametrically opposite each other are provided, which project crosswise to the longitudinal axis of the elongated hole into the elongated hole of the sound absorbing element (71).

5. Mounting bracket according to one of claims 2 to 4, **characterised in that** on one collar (24; 64) of one housing part (22; 62) at least one lug (25; 65) projecting over the free edge of this collar (24; 64) and on the opposite collar (25; 69) of the other housing part (27; 67) at least one recess (30; 70) for housing the lug (25; 65) is provided.

6. Mounting bracket according to one of claims 1 to 5, **characterised in that** the sound absorbing element (31; 71) has at least one reinforcement (35, 36, 39, 40) running along the longitudinal axis of its elongated hole, the height of which (E) over a plane stretching from the sound absorbing element (31) corresponds to at least 1.0 times the thickness (D) of the sound absorbing element (31).

7. Mounting bracket according to claim 6, **characterised in that** the at least one reinforcement (35, 39) runs in the longitudinal axis of the elongated hole of the sound absorbing element (31).

## Revendications

1. Équerre de montage pour la fixation d'une gaine à un élément de construction, comprenant un élément formant équerre (12), lequel comporte une première branche (13) pour la fixation à la gaine et au moins une seconde branche (15 ; 55) pourvue d'une première ouverture traversante (16 ; 56) pour un élément de fixation apte à fixer l'équerre de montage (11 ; 51) à l'élément de construction, comprenant une première partie de boîtier (22 ; 62) pourvue d'une seconde ouverture traversante (23) pour l'élément de fixation et une seconde partie de boîtier (27 ; 67) pourvue d'une troisième ouverture traversante (28) pour l'élément de fixation, les parties de boîtier (22, 27 ; 62, 67) entourant la seconde branche (15 ; 55) au moins par endroits sur deux côtés opposés, et comprenant un élément insonorisant (31 ; 71) qui est pourvu d'une quatrième ouverture traversante (33, 38 ; 73) pour l'élément de fixation et qui entoure la seconde branche (15 ; 55) par endroits et la découple des parties de boîtier (22, 27 ; 62, 67), **caractérisée en ce que** les ouvertures traversantes (16, 23, 28, 33 ; 73) ménagées dans la seconde branche (15 ; 55) au nombre d'au moins une, dans les parties de boîtier (22, 27 ; 62, 67) et dans l'élément insonorisant (31 ; 71) sont des trous oblongs, le trou oblong ménagé dans la seconde branche (15 ; 55) au nombre d'au moins une coïncidant exactement avec les trous oblongs ménagés dans les parties de boîtier (22, 27 ; 62, 67) et avec le trou oblong ménagé dans l'élément insonorisant (31 ; 71).

2. Équerre de montage selon la revendication 1, **caractérisée en ce qu'**une collerette (24, 29 ; 64, 69) est prévue dans chaque ouverture traversante (23 ; 28) des parties de boîtier (22, 27 ; 62, 67), les collerettes (24, 29 ; 64, 69) étant tournées l'une vers l'autre à l'état assemblé de l'équerre de montage (11 ; 51), et l'élément insonorisant (31 ; 71) comportant au moins deux saillies diamétralement opposées (34 ; 74, 75) qui dépassent dans le trou oblong de l'élément insonorisant (31 ; 71).

3. Équerre de montage selon la revendication 2, **caractérisée en ce que** les saillies (34 ; 74) au nombre d'au moins deux s'étendent selon l'axe longitudinal du trou oblong de l'élément insonorisant (31 ; 71).

4. Équerre de montage selon la revendication 2 ou 3, **caractérisée en ce qu'**il est prévu au moins deux autres saillies diamétralement opposées (75) qui dépassent dans le trou oblong de l'élément insonorisant (71) perpendiculairement à l'axe longitudinal du trou oblong.

5. Équerre de montage selon une des revendications 2 à 4, **caractérisée en ce qu'**au moins un talon (25 ; 65) dépassant du bord libre d'une collerette (24 ; 64) de l'une des parties de boîtier (22 ; 62) est prévu sur cette collerette (24 ; 64), et au moins un évidement (30 ; 70) est ménagé dans la collerette opposée (25 ; 69) de l'autre partie de boîtier (27 ; 67) pour recevoir le talon (25 ; 65).

6. Équerre de montage selon une des revendications 1 à 5, **caractérisée en ce que** l'élément insonorisant (31 ; 71) comporte au moins un renfort (35, 36, 39, 40) qui s'étend suivant l'axe longitudinal de son trou oblong et dont la hauteur (E) au-dessus d'un plan défini par l'élément insonorisant (31) correspond au moins à 1,0 fois l'épaisseur (D) de l'élément insonorisant (31).

7. Équerre de montage selon la revendication 6, **caractérisée en ce que** le renfort (35, 39) au nombre d'au moins un s'étend selon l'axe longitudinal du trou oblong de l'élément insonorisant (31).
